Europäisches Patentamt

European Patent Office

Office européen des brevets

(11) Veröffentlichungsnummer: **0 159 661**
B1

(12) **EUROPÄISCHE PATENTSCHRIFT**

(45) Veröffentlichungstag der Patentschrift:
18.01.89

(51) Int. Cl.⁴: **G 01 N 25/02**

(21) Anmeldenummer: 85104641.7

(22) Anmeldetag: 17.04.85

(54) **Verfahren und Einrichtung zur Bestimmung der Sättigungstemperatur einer heissen, unter Druck stehenden Flüssigkeit.**

(30) Priorität: 26.04.84 DE 3415490

(43) Veröffentlichungstag der Anmeldung:
30.10.85 Patentblatt 85/44

(45) Bekanntmachung des Hinweises auf die Patenterteilung:
18.01.89 Patentblatt 89/3

(84) Benannte Vertragsstaaten:
BE CH DE FR IT LI SE

(56) Entgegenhaltungen:
EP-A- 0 065 128
DE-A- 3 108 763
DE-A- 3 113 697
DE-A- 3 321 015

(73) Patentinhaber: **ABB Reaktor GmbH, Dudenstrasse 44,
D-6800 Mannheim 1 (DE)**

(72) Erfinder: **Schemmel, Richard, Dipl.-Ing.,
Behringstrasse 4, D-6837 St. Leon-Rot (DE)**
Erfinder: **Knoglinger, Ernst, Dr. Dipl.-Phys.,
Germaniastrasse 14, D-6835 Brühl (DE)**
Erfinder: **Rush, Gregory C., 6038 Oakhill n.e., Alliance
Ohio 44601 (US)**

(74) Vertreter: **Kempe, Wolfgang, Dr. et al, c/o BROWN,
BOVERI & CIE AG ZPT Postfach 351,
D-6800 Mannheim 31 (DE)**

## Beschreibung

Die Erfindung betrifft ein Verfahren zur Bestimmung der Sättigungstemperatur einer heissen, unter Druck stehenden Flüssigkeit mit einem über eine Wirkdruckleitung mit der Flüssigkeit in Verbindung stehenden Prüfbehälter, dem ein Heizelement, ein Temperaturfühler und ein Dampfwasser-Detektor zugeordnet ist, wobei die Leistung des Heizelements von dem Dampfwasser-Detektor gesteuert wird.

Ein derartiges Verfahren ist aus der DE-A-3 321 015 bekannt. Dort ist eine Trennung in eine Dampf- und eine Wasserphase zwingend erforderlich. Die Wirkdruckleitung mündet in den unteren Bereich des Prüfbehälters. Der Dampf-Wasser-Detektor steuert zwar die Heizleistung, dient aber letzten Endes nur als Anzeigeelement, ob in seinem Bereich Dampf oder Wasser vorliegt. Im praktischen Einsatz hat sich gezeigt, dass bei grossen Drucktransienten in der zu überwachenden Anlage das gewünschte Niveau innerhalb des Prüfbehälters zwischen Dampf-/Wasserphase nicht zu halten ist. Das führte nicht selten zu einem Ausdampfen des gesamten Wasserinhalts des Prüfbehälters über die Wirkdruckleitung.

Es ist daher die Aufgabe der Erfindung, ein Verfahren der eingangs genannten Art anzugeben, das auch bei grössten Drucktransienten das Wasserniveau im Prüfbehälter oberhalb des Dampf-/Wasser-Detektors hält.

Gelöst wird die Aufgabe erfindungsgemäss dadurch, dass die Flüssigkeit im oberen Drittel des Prüfbehälters eingeleitet wird, dass die innerhalb des Prüfbehälters angeordnete Flüssigkeit bis unterhalb der Sättigungstemperatur aufgeheizt und in diesem unterkühlten Zustand gehalten wird, dass die Temperatur der im Prüfbehälter angeordneten Flüssigkeit gemessen wird und dass der um den Unterkühlungsgrad korrigierte Temperaturwert die Sättigungstemperatur darstellt.

Durch die Unterkühlung wird erreicht, dass der Prüfbehälter bei Normalbetrieb der zu überwachenden Anlage ständig mit Flüssigkeit gefüllt ist. Die Einmündung in den oberen Prüfbehälterbereich stellt sicher, dass auch bei dem Auftreten von starken Druckschwankungen (Transienten) in der zu überwachenden Anlage nur der Dampf einer im Prüfbehälter kurzzeitig auftretenden Dampfblase und keine Flüssigkeit über die Wirkdruckleitung ausgetragen wird. Die gemessene Temperatur der Flüssigkeit wird um den Grad ihrer Unterkühlung korrigiert, um zur Sättigungstemperatur zu gelangen.

Aus der EP-A-0 065 128 ist zwar eine Einrichtung zur Bestimmung der Sättigungstemperatur bekannt, bei der in einem von einer Rohrleitung auskragenden Rohrstummel ein Heizelement und zwei Temperaturfühler angeordnet sind. In der Rohrleitung, also ausserhalb des Rohrstummels, ist ein weiterer Temperaturfühler vorgesehen. Wegen der unmittelbaren Verbindung des Rohrstummels mit der Rohrleitung fehlt eine Wirkdruckleitung und ein separater Behälter, so dass ein besonderer Verlauf der Wirkdruckleitung und eine ständige Unterkühlung der in einem Prüfbehälter angeordneten Flüssigkeit dort nicht ausführbar ist.

Eine Einrichtung zur Durchführung des Verfahrens zeichnet sich dadurch aus, dass der Prüfbehälter in seinem oberen Bereich im Querschnitt erweitert ist, dass die Mündung der Wirkdruckleitung nach oben gerichtet ist und dass zur Überwachung und Korrektur des unterkühlten Zustandes der Dampfwasser-Detektor eingesetzt ist, und dass der Temperaturfühler einen nur den Unterkühlungsgrad überhöhten Sättigungstemperaturwert anzeigt.

Mit der Querschnittsvergrösserung des Prüfbehälters wird bei Transienten mit Druckabfall eine Trennung der ausströmenden Dampfphase von der Flüssigkeitsphase herbeigeführt, die einen Austrag von Wasser verhindert. Durch die in den oberen Bereich des Prüfbehälters mündende Wirkdruckleitung wird diese Wirkung noch unterstützt. Die nach oben gerichtete Mündung der Wirkdruckleitung verhindert im Normalbetrieb einen konvektiven Wärmeaustrag nach draussen und vermindert das unerwünschte Einströmen kalter Flüssigkeit aus der Wirkdruckleitung in den Prüfbehälter am Ende einer Transienten mit Druckabfall.

Nach einer weiteren Ausgestaltung der Einrichtung ist die Heizleistung des Heizelements so geregelt, dass bei Normalbetrieb der zu überwachenden Anlage der Prüfbehälter vollständig mit leicht unterkühlter Flüssigkeit gefüllt ist, wobei zwischen der zugeführten Heizleistung und der über die Oberfläche des Prüfbehälters abgeführten Wärmemenge ein Gleichgewichtszustand besteht.

Überraschend wurde gefunden, dass das vorgeschlagene Verfahren auch zur Ermittlung der Sättigungstemperatur eines dampfförmigen Mediums verwendet werden kann.

Hier macht man sich die Kondensationsfähigkeit von Dampf zu nutzen. Nach dem der Prüfbehälter einmal mit Kondensat des Dampfes aus einer zu überwachenden Anlage gefüllt ist, wird diese Flüssigkeit dann ebenfalls bis in die Nähe ihrer Sättigungstemperatur aufgeheizt und in diesem unterkühlten Zustand gehalten.

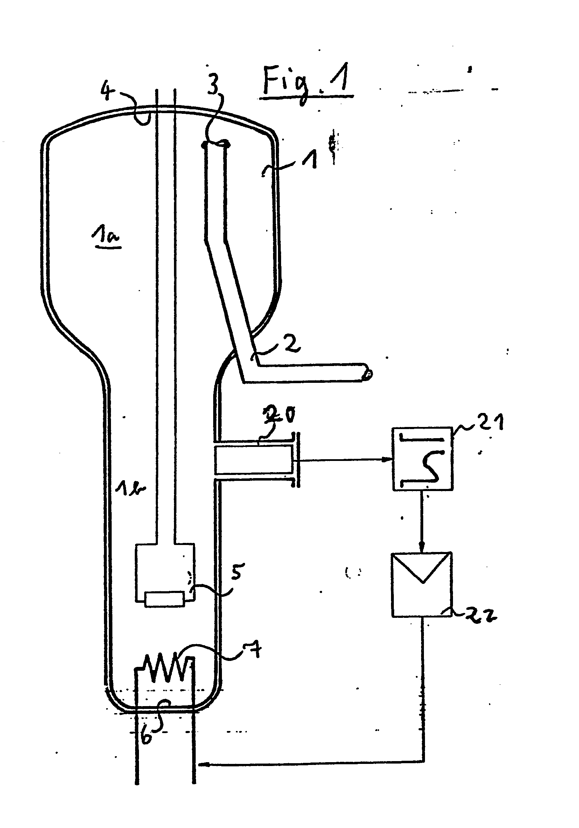

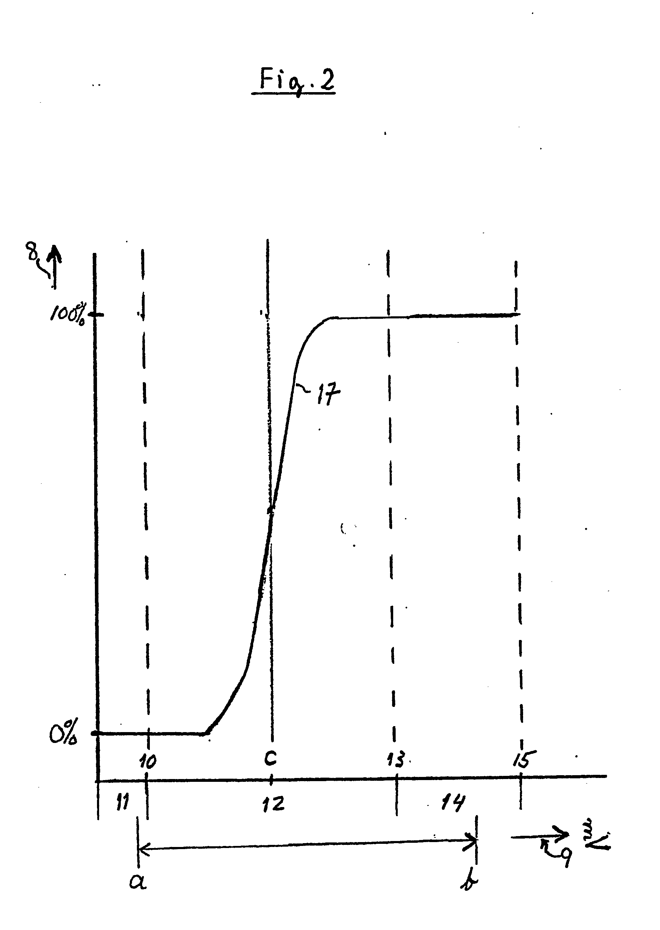

Anhand der Figuren 1 und 2 und je eines Ausführungsbeispiels für ein flüssiges und ein dampfförmiges Medium wird die Erfindung beschrieben.

Die Figur 1 zeigt einen als zylindrischen Druckbehälter ausgebildeten Prüfbehälter 1. Über eine Wirkdruckleitung 2 ist der Prüfbehälter mit einer nicht dargestellten Anlage verbunden, in der eine heisse, unter Druck stehende und zu überwachende Flüssigkeit zirkuliert. Die Mündung 3 dieser Wirkdruckleitung 2 ist nach oben gerichtet und endet in der Nähe des oberen Abschlusses 4 des Prüfbehälters 1. In seinem oberen Bereich 1a weist der Prüfbehälter einen grösseren Querschnitt auf, als in seinem unteren Bereich 1b. Die Querschnittsvergrösserung ist dabei so gewählt, dass bei grossen Druckschwankungen keine nennenswerte Wassermenge durch das ausdampfende Wasser über die Wirkdruckleitung ausgetragen wird. Während dem Normalbetrieb der zu überwachenden Anlage ist der Prüfbehälter 1 vollständig mit leicht unterkühltem Wasser gefüllt. Die Unterkühlung beträgt weniger als 5K. Zur Überwachung und Korrektur des unterkühlten Zustandes wird ein von der Seite her in den unteren Bereich 1b des Prüfbehälters eingeführter Dampfwasser-Detektor 20 verwendet. Ein Temperaturfühler 5 ist unterhalb des Dampfwasser-Detektors 20 vom Wasser umgeben. Die von ihm gemessene Temperatur stellt nach der Korrektur um den vom Dampfwasser-Detektor bestimmten Unterkühlungsgrad die Sättigungstemperatur der zu überwachenden Flüssigkeit dar. Beträgt z.B. die gemessene Temperatur 300 °C und der Unterkühlungsgrad 3K, so beträgt die Sättigungsteperatur 303 °C. Das in der Nähe des Bodens 6 des Prüfbehälters 1 angeordnete Heizelement 7 dient zur Sicherstellung der gewünschten Unterkühlung von maximal 5K in jeder Betriebslage der zu überwachenden Anlage. Mit 21 ist eine Kontroll-Logik für den Dampfwasser-Detektor 20 und mit 22 ein Überwachungsgerät für das Heizelement 7 bezeichnet.

Das Zusammenspiel von Dampfwasser-Detektor und Heizelement zur Steuerung der Unterkühlung ist dem Schaubild nach Fig. 2 zu entnehmen. Auf der Ordinate ist die Stellgrösse der Heizleistung von 0 bis 100% in Pfeilrichtung 8 aufgetragen. In Pfeilrichtung 9 sind auf der Abszisse die Signale des Dampfwasser-Detektors in Millivolt angegeben. Zwischen der Ordinate und der dazu parallelen Linie 10 ist der Bereich 11 des gesättigten Wassers angedeutet. Der Bereich 12 zwischen den parallelen Linien 10 und 13 symbolisiert bis zu 5K unterkühltes Wasser. In diesem Bereich 12 arbeitet das erfindungsgemässe Verfahren. Der Bereich 14 zwischen den parallelen Linien 13 und 15 steht für Wasser, das um mehr als 5K unterkühlt ist. Die Linie C symbolisiert den Sollwert der Unterkühlung mit ca. 3K unterhalb der Sättigungstemperatur der Flüssigkeit. Das im Bereich 12 arbeitende System ist so ausgelegt, dass bei Normalbetrieb der zu überwachenden Anlage der Prüfbehälter 1 vollständig mit ca. 3K unterkühltem Wasser gefüllt ist. Dabei sind die Heizleistung des Heizelements und die Wärmeabgabe der Oberfläche des Prüfbehälters derart aufeinander abgestimmt, dass Gleichgewicht zwischen Wärmeabfuhr und Wärmezufuhr besteht. Wie der Kurvenast 17 zeigt, wird bei einer Abweichung der Unterkühlung von dem Sollwert (3K) eine Stellgrössenänderung der Heizleistung herbeigeführt.

Das Verfahren zur Bestimmung der Sättigungstemperatur läuft wie folgt ab:

Über die Wirkdruckleitung 2 wird der Prüfbehälter 1 mit Flüssigkeit gefüllt. Abhängig von dem in der zu überwachenden Anlage herrschenden Druck wird der Wasserinhalt des Behälters auf eine Unterkühlung von ca. 3K eingestellt. Treten nunmehr schnelle Druckänderungen (Transienten) in der zu überwachenden Anlage auf, so tritt aufgrund des vollständig gefüllten Prüfbehälters 1 keine so weite Absenkung des Wasserstandes ein, wie beim Stand der Technik. Zusätzlich wirkt die im oberen Bereich 1a des Prüfbehälters vorgesehene Querschnittsvergrösserung zusammen mit der nach oben gerichteten Mündung der Wirkdruckleitung einem Austragen von Wasser entgegen.

Wird das vorgeschlagene Verfahren zur Bestimmung der Sättigungstemperatur eines dampfförmigen Mediums verwendet, so wird der Prüfbehälter zu Anfang mit Wasser gefüllt. Die im Prüfbehälter befindliche Flüssigkeit wird dann auf eine Unterkühlung von weniger als 5K gebracht. Die in der Flüssigkeit von Temperaturfühler 5 gemessene Temperatur zeigt dann, korrigiert um den Unterkühlungsgrad der Flüssigkeit, die Sättigungstemperatur des Dampfes der zu überwachenden Anlage an. Ebenso wie bei dem Ausführungsbeispiel für Flüssigkeit verhindert die Bauweise des Prüfbehälters und die Einmündung der Wirkdruckleitung 2 ein Austrag von Flüssigkeitsanteilen. Die Funktionsfähigkeit des Systems bleibt somit erhalten.

## Patentansprüche

1. Verfahren zur Bestimmung der Sättigungstemperatur einer heissen, unter Druck stehenden Flüssigkeit unter Verwendung eines über eine Wirkdruckleitung (2) mit der Flüssigkeit in Verbindung stehenden Prüfbehälters (1), dem ein Heizelement (7), ein Temperaturfühler (5) und ein Dampf-/Wasser-Detektor (20) zugeordnet ist, wobei die Leistung des Heizelements von dem Dampf-/Wasser-Detektor gesteuert wird, dadurch gekennzeichnet, dass die Flüssigkeit im oberen Bereich des Prüfbehälters (1) eingeleitet wird, dass die innerhalb des Prüfbehälters angeordnete Flüssigkeit bis unterhalb der Sättigungstemperatur aufgeheizt und in diesem unterkühlten Zustand gehalten wird, dass die Temperatur der im Prüfbehälter (1) angeordneten Flüssigkeit gemessen wird und dass der um den Unterkühlungsgrad korrigierte Temperaturwert die Sättigungstemperatur darstellt.

2. Verfahren nach Anspruch 1, dadurch gekennzeichnet, dass die Unterkühlung weniger als 5K beträgt.

3. Einrichtung zur Bestimmung der Sättigungstemperatur einer heissen, unter Druck stehenden Flüssigkeit mit einem über eine Wirkdruckleitung (2) mit der Flüssigkeit in Verbindung stehenden Prüfbehälter (1), dessen Innenraum ein Heizelement (7), und ein Temperaturfühler (5) und eine Dampf-/Wasser-Detektor (20) zugeordnet ist, wobei die Leistung des Heizelementes von dem Dampf-/Wasser-Detektor gesteuert wird, zur Durchführung des Verfahrens nach Anspruch 1 oder 2, dadurch gekennzeichnet, dass der Prüfbehälter (1) in seinem oberen Bereich (1a) im Querschnitt erweitert ist, dass die Mündung (3) der Wirkdruckleitung (2) nach oben gerichtet ist, dass zur Überwachung und Korrektur des unterkühlten Zustandes der Dampf-/Wasser-Detektor (20) eingesetzt ist und dass der Temperaturfühler (5) einen um den Unterkühlungsgrad überhöhten Sättigungstemperaturwert anzeigt.

4. Einrichtung nach Anspruch 3, dadurch gekennzeichnet, dass die Heizleistung des Heizelements (7) so geregelt ist, dass bei Normalbetrieb der zu überwachenden Anlage der Prüfbehälter (1) vollständig mit leicht unterkühlter Flüssigkeit gefüllt ist, wobei zwischen der zugeführten Heizleistung und der über die Oberfläche des Prüfbehälters (1) abgeführten Wärme ein Gleichgewichtszustand besteht.

5. Verwendung des Verfahrens nach Anspruch 1 und 2 zur Bestimmung der Sättigungstemperatur eines unter Druck stehenden, dampfförmigen Mediums, das über eine Wirkdruckleitung (2) mit einem Prüfbehälter (1) in Verbindung steht, dem ein Heizelement (7), ein Temperaturfühler (5) und ein Dampf-/Wasser-Detektor (20) zugeordnet ist, wobei die Leistung des Heizelementes von dem Dampf-/Wasser-Detektor gesteuert wird, dadurch gekennzeichnet, dass der Prüfbehälter (1) über die Wirkdruckleitung (2) mit Flüssigkeit gefüllt wird, dass die innerhalb des Prüfbehälters angeordnete Flüssigkeit bis unterhalb der Sättigungstemperatur aufgeheizt und in diesem unterkühlten Zustand gehalten wird, dass die Temperatur der im Prüfbehälter angeordneten Flüssigkeit gemessen wird und dass der um den Unterkühlungsgrad korrigierte Temperaturwert die Sättigungstemperatur des dampfförmigen Mediums darstellt.

**Claims**

1. Method of determining the saturation temperature of a hot pressurized liquid by employing a test vessel (1), which is connected to the liquid via a differential pressure line (2) and to which is assigned a heating element (7), a temperature detector (5) and a steam/water detector (20), the power of the heating element being controlled by the steam/water detector, characterized in that the liquid is introduced into the upper region of the test vessel (1), in that the liquid located inside the test vessel is heated up to below the saturation temperature and is held in this undercooled state, in that the temperature of the liquid located in the test vessel (1) is measured, and in that the temperature value corrected by the degree of undercooling represents the saturation temperature.

2. Method according to Claim 1, characterized in that the undercooling amounts to less than 5K.

3. Apparatus designed for carrying out the method according to Claim 1 or 2 for determining the saturation temperature of a hot, pressurized liquid, having a test vessel (1), which is connected to the liquid via a differential pressure line (2), and to the interior of which is assigned a heating element (7), a temperature detector (5) and a steam/water detector (20), the power of the heating element being controlled by the steam/water detector, characterized in that the test vessel (1) is widened in cross-section in its upper region (1a), in that the mouth (3) of the differential pressure line (2) is directed upwards, in that the steam/water detector (20) is used to monitor and correct the undercooled state, and in that the temperature detector (5) indicates a saturation temperature value enhanced by the degree of undercooling.

4. Apparatus according to Claim 3, characterized in that the heating power of the heating element (7) is regulated in such a way that, during normal operation of the plant to be monitored, the test vessel (1) is completely filled with slightly undercooled liquid, there being a state of equilibrium between the heating power supplied and the heat dissipated over the surface of the test vessel (1).

5. Application of the method according to Claims 1 and 2 for determining the saturation temperature of a pressurized vaporous medium connected via a differential pressure line (2) to a test vessel (1) to which is assigned a heating element (7), a temperature detector (5) and a steam/water detector (20), the power of the heating element being controlled by the steam/water detector, characterized in that the test vessel (1) is filled with liquid via the differential pressure line (2), in that the liquid located inside the test vessel is heated up to below the saturation pressure and is held in this undercooled state, in that the temperature of the liquid located in the test vessel is measured, and in that the temperature value corrected by the degree of under-cooling represents the saturation temperature of the vaporous medium.

**Revendications**

1. Procédé de détermination de la température de saturation d'un liquide chaud, sous pression, utilisant un récipient d'essai (1) relié au liquide par une conduite de pression (2), récipient à qui sont affectés un élément de chauffage (7), une sonde de température (5) et un détecteur vapeur/eau (20), la puissance de l'élément de chauffage étant commandée par le détecteur vapeur/eau, caractérisé en ce que le liquide est introduit dans la zone supérieure du récipient d'essai (1), en ce que le liquide se trouvant à l'intérieur du récipient d'essai est chauffé jusqu'à une température située au-dessous de la température de saturation et est maintenu dans cet état de surfusion, que la température du liquide se trouvant dans le récipient d'essai (1) est mesurée et que la valeur de température, corrigée du degré de surfusion, représente la température de saturation.

2. Procédé selon revendication 1, caractérisé en ce que la surfusion est inférieure à 5 K.

3. Dispositif pour la détermination de la température de saturation d'un liquide chaud, sous pression, avec un récipient d'essai (1) relié au liquide par une conduite de pression (2), récipient à l'espace intérieur duquel sont disposés un élément de chauffage (7), et une sonde de température (5) et un détecteur vapeur/eau (20), la puissance de l'élément de chauffage étant commandée par le détecteur vapeur/eau, pour la mise en œuvre du procédé selon les revendications 1 ou 2, caractérisé en ce que le récipient d'essai (1) présente une section agrandie dans sa zone (1a) supérieure, que l'embouchure (3) de la conduite de pression (2) est orientée vers le haut, que le détecteur vapeur/eau (20) est utilisé pour le contrôle et la correction de l'état de surfusion et que la sonde de température (5) indique une valeur de température de saturation augmentée du degré de surfusion.

4. Dispositif selon la revendication 3, caractérisé en ce que la puissance de chauffage de l'élément de chauffage (7) est régulée de telle sorte qu'en fonctionnement normal de l'installation à contrôler, le récipient d'essai (1) soit complètement rempli de liquide en léger état de surfusion et qu'un état d'équilibre s'établisse entre la puissance calorifique apportée et la chaleur évacuée par la surface du récipient d'essai (1).

5. Utilisation du procédé selon les revendications 1 et 2, pour déterminer la température de saturation d'un fluide sous pression, sous forme de vapeur, qui est relié à un récipient d'essai (1), par une conduite de pression (2), à qui sont affectés un élément de chauffage (7), une sonde de température (5) et un détecteur vapeur/eau (20), la puissance de l'élément de chauffage étant commandée par le détecteur vapeur/eau, caractérisée en ce que le récipient d'essai (1) est rempli de liquide par la conduite de pression (2), que le liquide se trouvant à l'intérieur du récipient d'essai est chauffé jusqu'à une température située au-dessous de la température de saturation et est maintenu dans cet état de surfusion, que la température du liquide se trouvant dans le récipient d'essai est mesurée et que la valeur de la température, corrigée du degré de surfusion, représente la température de saturation du fluide sous forme de vapeur.

Fig. 1

# Fig.2